(19) Europäisches Patentamt
European Patent Office
Office européen des brevets

(11) Veröffentlichungsnummer: **0 315 867 B1**

# (12) EUROPÄISCHE PATENTSCHRIFT

(45) Veröffentlichungstag der Patentschrift: **28.04.93**

(51) Int. Cl.[5]: **C08L 69/00**, //(C08L69/00, 51:08)

(21) Anmeldenummer: **88118108.5**

(22) Anmeldetag: **31.10.88**

## (54) Mischungen von Polycarbonaten mit siloxanhaltigen Pfropfpolymerisaten.

(30) Priorität: **10.11.87 DE 3738109**

(43) Veröffentlichungstag der Anmeldung:
**17.05.89 Patentblatt 89/20**

(45) Bekanntmachung des Hinweises auf die Patenterteilung:
**28.04.93 Patentblatt 93/17**

(84) Benannte Vertragsstaaten:
**DE ES FR GB IT NL**

(56) Entgegenhaltungen:
**EP-A- 0 246 537**
**EP-A- 0 260 558**
**EP-A- 0 296 402**
**DE-A- 2 659 357**

(73) Patentinhaber: **BAYER AG**

**W-5090 Leverkusen 1 Bayerwerk(DE)**

(72) Erfinder: **Wittmann, Dieter, Dr.**
**Doerperhofstrasse 15**
**W-4150 Krefeld 1(DE)**
Erfinder: **Lindner, Christian, Dr.**
**Riehlerstrasse 200**
**W-5000 Koeln 60(DE)**
Erfinder: **Damrath, Volker, Dr.**
**Dierath 26**
**W-5093 Burscheid(DE)**
Erfinder: **Kress, Hans-Jürgen, Dr. c/o Mobay Corporation**
**Plastics and Rubber Division Building 8 Mobay Road**
**Pittsburgh, PA 15205(US)**
Erfinder: **Peters, Horst, Dr.**
**Winterberg 25**
**W-5090 Leverkusen 3(DE)**
Erfinder: **Schoeps, Jochen, Dr.**
**Windmuehlenstrasse 126**
**W-4150 Krefeld 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Mischungen von thermoplastischen Polycarbonaten mit Pfropfpolymerisaten sind lange bekannt. Je nach Aufbau der Pfropfpolymerisate sind jedoch noch Verbesserungen der Alterungs bzw. Witterungsbeständigkeit einerseits oder der Schlagfestigkeit bei tiefen Temperaturen andererseits wünschenswert, um einen Außeneinsatz vor allem im Automobilsektor noch mehr zu begünstigen.

Gemäß EP-OS 0 135 794 (Le A 22 390) besteht eine Modifizierung der Polycarbonatkomponente durch den Einbau von Siloxanblöcken in die Polycarbonatkomponente, wodurch vor allem eine Verbesserung der Zähigkeit vor allem bei tiefen Temperaturen sowie eine Verbesserung des Brandverhaltens erreicht wird. (Siehe beispielsweise Seite 15 der EP-OS 0 135 794). Es bestehen jedoch trotz guter Tieftemperaturzähigkeit gewisse Nachteile, herrührend von den jeweils verwendeten Pfropfpolymerisatkomponenten.

Gemäß EP-OS 0 022 979 bzw. US-Patent 4 305 856 werden Polycarbonat-ABS-Mischungen beschrieben, die Mengen von 0,05 bis 3 Gew.-% eines Silikons zum Zweck der besseren Entformbarkeit zugesetzt enthalten.

Aus der DE-OS 2 659 357 sind schlagzähe thermoplastische Formmassen bekannt, die auf 100 Gewichtsteile eines thermoplastisch verarbeitbaren Kunststoffs, beispielsweise Polycarbonat, 1 bis 50 Gewichtsteile eines kautschukelastischen Pfropfpolymeren enthalten, welches durch Polymerisation von ungesättigten Monomeren in Gegenwart von Organopolysiloxanen und/oder Silikon-Kautschuken hergestellt wurden.

Die Formmassen besitzen gemäß DE-OS 2 659 357 hohe Kälteschlagzähigkeit bei gleichzeitig guter Witterungs-und Alterungsbeständigkeit, hoher Oberflächengüte, reiner Eigenfarbe und hoher Farbstabilität, ohne daß dabei die ursprünglichen Eigenschaften der thermoplastisch verarbeitbaren Kunststoffe wesentlich beeinträchtigt werden. (Seite 3, letzter Absatz der DE-OS).

Aus der EP-OS 0 034 748 (Le A 20 199) sind ebenfalls kerbschlagzähe Polymerisate mit verbesserter Witterungsbeständigkeit bekannt, welche außerdem mit thermoplastischen Polycarbonaten und mit Polymethacrylaten abgemischt werden können. (Siehe EP-OS 0 089 540/Le A 21 498). Derartige Formmassen haben jedoch für manche Anwendungen eine nicht ausreichende Tieftemperaturzähigkeit.

Es hat sich nun gezeigt, daß eine Optimierung des Eigenschaftsbildes bezüglich Tieftemperaturzähigkeit und Witterungs- bzw. Alterungsbeständigkeit dadurch erreicht wird, daß man Pfropfpolymerisate von Silikonkautschuken einsetzt, die wiederum ihrerseits in Gegenwart eines harzartigen Polymerisats hergestellt sind, welches eine Erweichungstemperatur (Glastemperatur) von über 30 ° C, vorzugsweise über 60 ° C und insbesondere über 90 ° C hat.

Gegenstand der vorliegenden Erfindung sind somit thermoplastische Polycarbonatformmassen enthaltend

A) 52 bis 94 Gew.-%, vorzugsweise 60 bis 86 Gew.-% eines oder mehrerer aromatischer Polycarbonate und

B) 6 bis 48 Gew.-%, vorzugsweise 14 bis 40 Gew.-% eines oder mehrerer teilchenförmigen Pfropfpolymerisate, die dadurch gekennzeichnet sind, daß die Pfropfpolymerisate herstellbar sind aus

B.1 20 bis 90 Gew.-Teilen, vorzugsweise 30 bis 80 Gew.-Teilen, besonders bevorzugt 45 bis 75 Gew.-Teilen einer Polymerisat-Pfropfauflage aus wenigstens einem $\alpha,\beta$-ungesättigten, olefinischen Monomer auf

B.2 80 bis 10 Gew.-Teile, vorzugsweise 70 bis 20 Gew.-Teile, besonders bevorzugt 55 bis 25 Gew.-Teile einer Pfropfgrundlage mit Kern/Mantel-Struktur, bestehend aus einem Kern a) aus organischem, harzartigem Polymerisat aus olefinisch ungesättigten Monomeren mit einer Glastemperatur (Tg) > 30 ° C, vorzugsweise > 60 ° C, besonders bevorzugt > 90 ° C, und einem Hüllenpolymerisat (Mantel) b) aus vernetztem Silikonkautschuk, wobei das Gewichtsverhältnis der Kerns a) zur Hülle, b) 0,1:99,9 bis 90:10, bevorzugt 10:90 bis 50:50, beträgt, und wobei die Pfropfpolymerisate B) einen mittleren Teilchendurchmesser ($d_{50}$) von 0,05 $\mu$m bis 10 $\mu$m, bevorzugt 0,1 $\mu$m bis 2 $\mu$m und besonders bevorzugt 0,1 bis 1 $\mu$m besitzen, und wobei die Summe der Gew.-Teile aus B.1 und B.2 stets 100 Gew.-Teile ergibt.

Polycarbonate gemäß Komponente A) sind thermoplastische, aromatische Polycarbonate, die durch Umsetzung von Diphenolen, insbesondere von Dihydroxydiarylkanen, mit Phosgen oder Diestern der Kohlensäure erhlaten werden, wobei außer den unsubstituierten Dihydroxydiarylalkanen auch solche geeignet sind, deren Arylreste in o-und/oder m-Stellung zur Hydroxylgruppe Methylgruppen oder Halogenatome tragen. Ebenso sind verzweigte Polycarbonate geeignet.

Die Polycarbonate gemäß Komponente A) haben mittlere Gewichtsmittel-Molekulargewichte $\overline{M}w$ zwischen 10 000 und 200 000, vorzugsweise zwischen 20 000 und 80 000, ermittelt z. B. durch Ultrazentrifugation oder Streulichtmessung.

Geeignete Diphenole sind z.B. Hydrochinon, Resorcin, 4,4′-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise ($C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxyphenyl)-propan-2,2 (Bisphenol A), Bis-(4-hydroxy-3,5-dichlor-phenyl)-propan-2,2 (Tetrachorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie $\alpha,\alpha'$-Bis-(4-hydroxyphenyl)-p-diisopropylbenzol.

Weitere für die Herstellung der Polycarbonate geeignete Diphenole sind in den US-Patenten 2 970 131, 2 991 273, 2 999 835, 2 999 846, 3 028 365, 3 062 781, 3 148 172, 3 271 367 und 3 275 601 beschrieben.

Die thermoplastischen, aromatischen Polycarbonate sind entweder literaturbekannt oder nach literaturbekannten Verfahren erhältlich.

Die Pfropfpolymerisate B) sind Gegenstand der deutschen Patentanmeldung P 3 720 476.9 (Le A 25 250) und die Pfropfgrundlage gemäß B.2 ist Gegenstand der deutschen Patentanmeldung P 3 704 655.1 (Le A 25 011).

Gemäß letzterer Patentanmeldung P 3 704 655.1 haben die als Pfropfgrundlage B.2 dienenden Mehrphasenpolymerisate mittlere Teilchendurchmesser von 0,05 bis 10 µm, bevorzugt 0,1 bis 2 µm und insbesondere 0,1 bis 1 µm.

In den deutschen Patentanmeldung P 3 720 476.9 ist die Herstellung der erfindungsgemäß einzusetzenden Pfropfpolymerisate B) über die Pfropfgrundlage B.2) beschrieben, aus der nachfolgende Passagen entnommen sind:

Die Kerne (a) aus organischem, harzartigem Polymerisat mit Erweichungstemperaturen (Glastemperaturen) über 30 °C, bevorzugt über 60 °C, und besonders über 90 °C, besitzen selbst mittlere Teilchengrößen ($d_{50}$) im Bereich von 0,05 bis 2 µm, insbesondere im Bereich von 0,09 bis 0,5 µm. Sie können unvernetzt, teilvernetzt oder hochvernetzt sein, bevorzugt sein Teilchen aus unvernetztem Polymerisat. Das Kernmaterial (a) stellt ein harzartiges Homo- oder Interpolymerisat aus wenigstens einem olefinisch ungesättigten polymerisierbaren Monomeren dar, insbesondere aus $\alpha$-Methylstyrol, Acrylnitril, Methacrylnitril, Alkylmethacrylat, Maleinsäureimid, Vinylester von $C_1$-$C_6$-Carbonsäuren, Olefin, insbesondere Ethylen, Vinylchlorid, Vinylidenchlorid, Acrylsäure, Methacrylsäure, Acrylamid oder Mischungen daraus.

Falls gewünscht, können die Polymerisate auch zusätzlich geringere Mengen (bis zu 10 Gew.-%) Butadien, Isopren, Alkylacrylat, Maleinsäureester eingebaut enthalten.

Bevorzugte Kernmaterialien sind Copolymerisate auf der Basis von Styrol und/oder $\alpha$-Methylstyrol mit Methylmethacrylat und/oder Acrylnitril, insbesondere Styrol-Acrylnitril-Copolymerisate, $\alpha$-Methylstyrol-Acrylnitril-Copolymerisate, Styrol-Methylmethacrylat-Copolymerisate sowie Polymethylmethacrylat.

Das Material der Hülle (b) oder des Mantels (b) gemäß deutscher Patentanmeldung p 3 720 476.9 ist ein mindestens teilvernetztes Homo- oder Interpolymerisat von Organosiloxanen, im wesentlichen aus Einheiten der allgemeinen Formel

$$R_nSiO_{\frac{4-n}{2}} \qquad (I)$$

worin R einen organischen Rest und n eine Zahl mit einem Durchschnittswert von 1 bis weniger als 3 bedeuten.

R kann z.B. ein einwertiger gesättigter Kohlenwasserstoffrest mit 1 bis 18 C-Atomen sein, wie Methyl, Ethyl, Phenyl oder ein anderer einwertiger gegebenenfalls substituierter Kohlenwasserstoffrest, der unter dem Einfluß von Radikalbildnern reaktionsfähig ist, insbesondere Vinyl, Allyl, Chloralkyl, Mercaptoalkyl, Acryloxypropyl. Bevorzugt sind mindestens 80 % aller Reste R Methylgruppen.

Die in den Pfropfpolymerisaten gemäß deutscher Patentanmeldung P 3 720 476.9 enthaltenen Pfropfauflagen (c) sind Polymerisate von $\alpha,\beta$-ungesättigten, polymerisierbaren Monomeren, vorzugsweise von Vinylmonomeren. Geeignete Monomere sind z.B. Styrol, $\alpha$-Methylstyrol, p-Methylstyrol, Halogenstyrol, Acrylnitril, Methacrylnitril, Vinylhalogenid, Maleinimide, Maleinsäurederivate, Vinylacetat, Vinylpropionat, (Meth)acrylsäurealkylester (mit bis zu 10 C-Atomen im Alkoholteil), Vinylether, konjugierte Diene, wie Butadien, Chloropren; besonders bevorzugt sind Styrol, Acrylnitril und $\alpha$-Olefine (z.B. Propen, Ethylen, Buten).

Die Pfropfauflagen (c) können Homopolymerisate oder bevorzugt Co-Polymerisate aus wenigstens zwei der genannten Monomeren z.B. Styrol und Acrylnitril, darstellen.

Diese Polymerisate (c) sind wenigstens teilweise auf den Siliconkautschuk aufgepfropft, d.h. chemisch mit ihm verbunden. In besonders bevorzugten Pfropfpolymerisaten ist mehr als 40 Gew.-% der Pfropfauflage tatsächlich aufgepfropft.

Die Pfropfpolymerisate gemäß deutscher Patentanmeldung P 3 720 476.9 können wie folgt hergestellt werden:
In der ersten Stufe wird eine Emulsion des Kernmaterials (a) hergestellt durch an sich bekannte Dispersionspolymerisation eines oder mehrerer Monomeren, insbesondere durch Emulsionspolymerisation in wäßrigem Medium mit radikalischen Initiatoren in Gegenwart von Emulgatoren. Durch die Wahl der Polymerisationsbedingungen lassen sich die Durchmesser der Polymerisatteilchen in der Emulsion einstellen. Man polymerisiert normalerweise bei 30 bis 100 °C. Bevorzugte Emulsionen des Kern-Polymerisats (a) besitzen einen pH-Wert kleiner 7 und werden mit anionischen Emulgatoren, insbesondere Salzen von Sulfonsäuren oder organischen Sulfaten hergestellt. Das verwendete Verhältnis von Monomer, Emulgator und Wasser bestimmt die Teilchendurchmesser der Polymerisate in den so erhaltenen Latices. Um teilweise oder vollständig vernetztes Kern-Material (a) zu erhalten, können die Monomeren zusammen mit wenigstens einem polyfunktionellen Vinyl- oder Allylmonomeren polymerisiert werden, insbesondere in Mengen von bis zu 5 Gew.-% bezogen auf die Monomeren. Vernetzende polyfunktionelle Monomere sind bekannt, bevorzugt sind Divinylbenzol, Bis-acrylate, Bis-acrylamide, Acrylsäurevinylester, Triallylcyanurat, -isocyanurat, -phosphat, -citrat.

In der zweiten Stufe wird in Gegenwart der Emulsion des Polymerisats der ersten Stufe das die Hülle (b) bildende Organopolysiloxan durch Emulsionspolymerisation hergestellt, indem man niedermolekulare Organosiloxane in dem Latex aus der ersten Stufe dispergiert und, gegebenenfalls in Gegenwart einer für eine stabile Emulsion nötigen Menge Emulgator sowie eines Katalysators, polymerisiert. Dabei muß vor der Polymerisation das grob disperigierte Organosiloxan nicht mechanisch, z.B. in schnellaufenden Rührwerken, Kolloidmühlen oder Hochdruckhomogenisatoren emulgiert werden. Vielmehr ist bevorzugt, gleichzeitig zu emulgieren und zu polymerisieren. Dadurch wird überraschenderweise erreicht, daß das sich bildende Organopolysiloxan auf das in der ersten Stufe hergestellte Kernmaterial (a) aufpolymerisiert. In der Regel wird bei 40 bis 100 °C polymerisiert.

Die Teilchendurchmesser auch dieser Kern-Mantel-Polymerisate lassen sich durch die Wahl der Polymerisationsbedingungen einstellen, z.B. durch Verwendung nichtionischer Coemulgatoren, das Verhältnis von Emulgator zu Organosiloxan sowie durch die Wahl von Kernmaterialien mit geeigneten Teilchendurchmessern.

Siliciumorganische Monomere und Oligomere zur Herstellung von (b) sind bekannt. Geeignet sind u.a. cyclische Organosiloxanoligomere, z.B. Octamethylcyclotetrasiloxan und Decamethylcyclopentasiloxan. Daneben sind Alkoxysilane und Alkoxysiloxane mit 1 bis 4 Kohlenstoffatomen geeignet, die in der Alkoxygruppe enthalten sind. Beispiele sind Methyltriethoxysilan, 3-Aminopropyltrimethoxysilan und 3-Mercaptopropylmethyldimethoxysilan. Geeignet sind ferner Polysiloxanole, insbesondere $\alpha,\omega$-Polysiloxandiole mit Molekulargewichten von etwa 2000 bis 5000 und einer Viskosität von 50 bis 150 mPa.s bei 25 °C.

Das Organopolysiloxan der Hülle (b) kann gemäß deutscher Patentanmeldung P 3 720 476.9 vernetzt werden durch den Einbau von z.B. Tetraethoxysilan oder eines Silans der allgemeinen Formel

$RSiX_3$ (II) ,

wobei X eine hydrolysierbare Gruppe, insbesondere den Alkoxyrest darstellt und R die für (I) angegebene Bedeutung hat. Bevorzugt ist R = Methyl und Phenyl. Eine Vernetzung kann jedoch auch stattfinden, wenn z.B. gleichzeitig eingesetzte Vinyl- und Mercaptogruppen bei der Emulsionspolymerisation der Siloxanbestandteile miteinander reagieren; dann ist die Zugabe eines externen Vernetzers nicht erforderlich.

Als Emulgatoren werden bekannte nichtionogene und/oder anionenaktive Emulgatoren verwendet.

Beispiele für nichtionogene Emulgatoren sind Anlagerungsprodukte von Ethylenoxid an Verbindungen mit acidem Wasserstoff, wie Fettalkohole und Fettsäuren. Der HLB-Wert der Emulgatoren soll in dem die Bildung von O/W-Emulsionen begünstigenden Bereich liegen, im allgemeinen ≧ 10. Geeignete nichtionogene Emulgatoren sind z.B. POE (3)-Laurylalkohol, POE (20)-Oleylalkohol, POE (7)-Nonylphenol und POE (10)-Stearat. (Die Schreibweise POE (3)-Laurylalkohol bedeutet, daß an ein Molekül Laurylalkohol 3 Einheiten Ethylenoxid angelagert sind, wobei die Zahl 3 einen Mittelwert darstellt, die übrigen Angaben sind analog zu verstehen).

Als anionenaktive Emulgatoren können die Alkalisalze von Fettsäuren oder die Alkali-, Erdalkali- oder Aminsalze von organischen Sulfonsäuren, insbesondere Alkylarylsulfonsäuren, verwendet werden. Beispiele

hierfür sind die Natriumsalze der Dodecylbenzolsulfonsäure und der Laurylsulfonsäure. Es ist möglich, Mischungen von nichtionogenen Emulgatoren mit anionenaktiven Emulgatoren zu verwenden.

Als Katalysatoren werden Säuren, bevorzugt grenzflächenaktive, verwendet. Beispiele sind Sulfonsäuren wie Alkyl sulfonsäuren und Alkylarylsulfonsäuren, speziell Dodecylbenzolsulfonsäure.

Bei der Polymerisation der Hülle (b) auf den Kern (a) muß die Bildung neuer Teilchen möglichst vollständig verhindert werden. Der Emulgator darf daher nur in einer zur Oberflächenbedeckung der Teilchen gerade ausreichenden Menge vorhanden sein. Verwendet man zur Bildung des Kerns (a) einen agglomerierten Latex, um ein Pfropfpolymerisat mit großen Teilchen zu erhalten, so kann dieses ungepfropfte Harz-Partikel enthalten. Man kann die Polymerisation der Hülle (b) auch so führen, daß neben Partikeln mit Kern-Mantel-Struktur gleichzeitig Partikel aus reinem Organopolysiloxan erzeugt werden. Mischungen beider Art sind gemäß P 3 720 476.9 ebenfalls herstellbar und verwendbar.

In der dritten Stufe des Herstellungsverfahrens werden die die Pfropfauflage bildenden Monomeren in Anwesenheit des Pfropfpolymerisats der zweiten Stufe radikalisch polymerisiert, insbesondere bei 40 bis 90 °C, wobei sich eine zweite Pfropfhülle ausbildet. Diese Pfropfpolymerisation kann in Suspension, Dispersion oder bevorzugt in Emulsion durchgeführt werden. Man kann diskontinuierlich oder kontinuierlich polymerisieren. Man initiiert mit Radikalbildnern (wie Peroxiden, Azoverbindungen, Hydroperoxiden, Persulfaten, Perphosphaten) und verwendet gegebenenfalls anionische Emulgatoren wie Carboniumsalze, Sulfonsäuresalze oder organische Sulfate. Dabei bilden sich die Pfropfpolymerisate mit hohen Pfropfausbeuten, d.h. ein großer Teil des sich bildenden Polymerisats (c) wird mit dem Siliconkautschuk chemisch verbunden. Das Pfropfpolymerisat der zweiten Stufe (a + b) macht besondere Verfahrensmaßnahmen für hohe Pfropfausbeute überflüssig.

Die so hergestellten Pfropfpolymerisate der dritten Verfahrensstufe können nach bekannten Methoden aufgearbeitet werden, z.B. durch Koagulation der Latices mit Elektrolyten (Salze, Säuren oder Gemische davon) und anschließende Reinigung und Trocknung.

Diese Pfropfpolymerisate gemäß deutscher Patentanmeldung P 3 720 476.9 besitzen überraschend gute Eigenschaften als Thermoplast z.B. Alterungsstabilität, Thermostabilität, besonders während der Verarbeitung zu Formkörpern, Oberflächenbeschaffenheit daraus hergestellter Formkörper, Verarbeitbarkeit, Tieftemperaturzähigkeit und Bruchfestigkeit.

Die thermoplastischen Polycarbonate ( Komponente A) können bis zur Hälfte, vorzugsweise bis zu einem Drittel, durch andere Thermoplaste (C), vorzugsweise durch thermoplastische Copolymerisate C) aus

C.1 50 bis 95 Gew.-Teilen, vorzugsweise 60 bis 80 Gew.-Teilen Styrol, α-Methyl-Styrol, kernsubstituiertem Styrol, Methylmethacrylat oder Mischungen daraus und

C.2 50 bis 5 Gew.-Teilen, vorzugsweise 40 bis 20 Gew.-Teilen, (Meth)Acrylnitril, Methylmethacrylat, Maleinsäureanhydrid, N-substituiertem Maleinimid oder Mischungen daraus, wobei die Summe der Gew.-Teile aus C.1 und C.2 jeweils 100 beträgt, ersetzt sein.

Andere Thermoplasten C) sind solche, die von den Komponenten A) und B) verschieden sind.

Gegenstand der vorliegenden Erfindung sind somit auch Formmassen, enthaltend

A) 52 bis 94 Gew.-%, vorzugsweise 60 bis 86 Gew.-%, eines oder mehrerer Polycarbonate und

B) 6 bis 48 Gew.-%, vorzugsweise 14 bis 40 Gew.-%, eines oder mehrerer der erfindungsgemäß einzusetzenden Pfropfpolymerisate wobei maximal die Hälfte der Gewichtsprozente, vorzugsweise maximal ein Drittel der Gewichtsprozente der Komponente A) durch andere Thermoplasten C), vorzugsweise durch thermoplastische Copolymerisate C) ersetzt sind, die aus

C.1 50 bis 95 Gew.-Teilen, vorzugsweise 60 bis 80 Gew.-Teilen Styrol, α-Methyl-Styrol, kernsubstituiertem Styrol, Methylmethacrylat oder Mischungen daraus und

C.2 50 bis 5 Gew.-Teilen, vorzugsweise 40 bis 20 Gew.-Teilen (Meth)Acrylnitril, Methylmethacrylat, Maleinsäureanhydrid, N-substituiertem Maleinimid oder Mischungen daraus hergestellt sind, wobei die Summe der Gew.-Teile aus C.1 und C.2 jeweils 100 beträgt, und wobei die Summe der Gewichtsprozente aus den Komponenten A) + B) + C) jeweils 100 Gew.-% ist.

Bevorzugte Copolymerisate C) sind solche aus wenigstens einem Monomeren aus der Reihe Styrol, α-Methylstyrol, kernsubstituiertem Styrol gemäß C.1 mit wenigstens einem

Monomeren aus der Reihe Acrylnitril, Methacrylnitril, Methylmethacrylat, Maleinsäureanhydrid, N-subst.-Maleinimid gemäß C.2.

Copolymerisate vom Typ C) entstehen auch bei der Pfropfpolymerisation zur Herstellung der Komponente B) als Nebenprodukte (siehe Seite 8 und Seite 13 vorliegender Anmeldung).

Die erfindungsgemäß einsetzbare Menge an Copolymerisat gemäß Komponente C) bezieht diese Nebenprodukte der Pfropfpolymerisation nicht mit ein.

Die Copolymerisate gemäß Komponente C) sind harzartig, thermoplastisch und kautschukfrei. Besonders bevorzugte Copolymerisate C) sind solche aus Styrol und/oder α-Methylstyrol mit Acrylnitril und

gegebenenfalls mit Methylmethacrylat.

Besonders bevorzugte Gewichtsverhältnisse im thermoplastischen Copolymerisat C) sind 60 bis 80 Gew.-% C.1 und 40 bis 20 Gew.-% C.2.

Die Copolymerisate C) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}w$ (Gewichtsmittel, ermittelt durch Lichtstreuung oder Sedimentation) zwischen 15.000 und 200.000.

Die erfindungsgemäßen Polycarbonatformmassen können weitere, für die Komponenten A), B) oder C) bekannte Zusätze, wie Stabilisatoren, Pigmente, Entformungsmittel, Flammschutzmittel und/oder Antistatika in den üblichen Mengen enthalten.

Die erfindungsgemäßen Formmassen, enthaltend die Komponenten A), B) und gegebenenfalls C), Stabilisatoren, Pigmente, Entformungsmittel, Flammschutzmittel und/oder Antistatika können hergestellt werden, indem man die Bestandteile in bekannter Weise vermischt und bei Temperaturen von 200 bis 330 ° C in üblichen Vorrichtungen wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Formmassen, enthaltend die Komponenten A), B) und gegebenenfalls C), Stabilisatoren, Pigmente, Entformungsmittel, Flammschutzmittel und/oder Antistatika, das dadurch gekennzeichnet ist, daß man die jeweiligen Bestandteile vermischt und dann bei Temperaturen von 200 bis 330 ° C in gebräuchlichen Vorrichtungen schmelzcompoundiert oder schmelzextrudiert.

Die Bestandteile können sukzessive oder simultan gemischt werden, sowohl bei etwa 20 ° C (Raumtemperatur) als auch bei höheren Temperaturen.

Die Formmassen der Erfindung können zur Herstellung von Formkörpern jeder Art verwendet werden. Insbesondere können Formkörper durch Spritzguß hergestellt werden. Beispiele für Formkörper sind: Gehäuseteile (z. B. für Haushaltsgeräte, wie Saftpressen, Kaffeemaschinen, Mixer), Abdeckplatten für Bauten und Automobilteile. Sie werden auch für elektrotechnische Geräte, z. B. Steckerleisten, eingesetzt, weil sie sehr gute elektrische Eigenschaften haben.

Formkörper können auch durch Tiefziehen aus vorher hergestellten Platten oder Folien hergestellt werden.

Teilchengröße bedeutet immer mittlerer Teilchendurchmesser $d_{50}$, ermittelt durch Ultrazentrifugenmessungen nach W. Scholten et al., Kolloid-Z. und Z. Polymere 250 (1972), 782 - 796.

Beispiele

Polycarbonate und Copolymerisate

A) lineares Polycarbonat auf Basis Bisphenol A mit einer relativen Lösungsviskosität $\eta_{rel}$ von 1,26 - 1,28, gemessen in $CH_2Cl_2$ bei 25 ° C und in einer Konzentration von 0,5 g / 100 ml.

C) Styrol/Acrylnitril-Copolymerisat mit einem Styrol/Acrylnitril-Verhältnis von 72 : 28 und einer Grenzviskosität von $(\eta)$ = 0,55 dl/g (Messung in Dimethylformamid bei 20 ° C).

Herstellung eines erfindungsgemäß einzusetzenden Pfropfpolymerisats B gemäß deutscher Patentanmeldung P 3 720 476.9 (Le A 25 250).

1. Herstellung eines Kernmaterials (a)

In einem Reaktor werden 3000 Gew.-Teile Wasser und 7,5 Gew.-Teile Na-Salz von $C_{14}$-$C_{18}$-Alkylsulfonsäuren vorgelegt. Nach Aufheizen unter Rühren auf 63 bis 65 ° C werden 240 Gew.-Teile einer Mischung aus 28 Gew.-% Acrylnitril und 72 Gew.-% Styrol in den Reaktor eingespeist. Nach Initiierung mit einer Lösung von 15 Gew.-Teilen Kaliumperoxodisulfat in 150 Gew.-Teilen Wasser werden innerhalb von 4 Stunden folgende Lösungen in den Reaktor eingespeist:

| | |
|---|---|
| Lösung 1: | 788 Gew.-Teile Acrylnitril |
| | 2025 Gew.-Teile Styrol |
| | 12 Gew.-Teile tert.-Dodecylmercaptan |
| Lösung 2: | 2100 Gew.-Teile Wasser |
| | 33 Gew.-Teile Na-Salz von $C_{14}$-$C_{18}$-Alkylsulfonsäuren |

Danach wird bei 65 ° C auspolymerisiert, bis der Latex einen Feststoffgehalt größer 36,5 Gew.-% aufweist. Der resultierende Latex 1 besitzt einen pH-Wert von 3,57 und einen mittleren Teilchendurchmesser ($d_{50}$-Wert) von 0,12 µm. Die Glastemperatur des Kernmaterials beträgt 100 ° C.

2. Herstellung von Kautschukteilchen (a + b)

In einem Reaktor werden unter Stickstoffatmosphäre vorgelegt:
150 Gew.-Teile der Harzemulsion (1.)
5,0 Gew.-Teile Octamethylcyclotetrasiloxan
Die Reaktionsmischung wird auf 85 ° C erwärmt und 2 Stunden gerührt.

Nach Zugabe einer Lösung von 1,4 Gew.-Teilen Dodecylbenzolsulfonsäure 1,4 Gew.-Teilen POE (5)-Laurylalkohol und 1,4 Gew.-Teilen $C_{12}$-$C_{14}$-Alkylsulfonsäure-Natriumsalz in 58 Gew.-Teilen Wasser wird eine Stunde bei 80 ° C nachgerührt. Anschließend wird eine Mischung aus 95 Gew.-Teilen Octamethylcyclotetrasiloxan, 2,5 Gew.-Teilen Mercaptopropylmethyldimethoxysilan und 3,1 Gew.-Teilen Tetramethyltetravinylcyclotetrasiloxan innerhalb von 2 Stunden eindosiert, die Polymerisation wird innerhalb 23 Stunden bei 80 ° C zu Ende geführt und die gebildete stabile Emulsion (Latex 2) auf Zimmertemperatur abgekühlt. Sie enthält das Mehrphasenpolymerisat in einer Konzentration von 48,7 Gew.-%. Der mittlere Teilchendurchmesser beträgt 0,18 µm. Das Polymerisat ist teilvernetzt, der Gelgehalt beträgt 58,2 %. Es besteht aus 35 Gew.-% Styrol-Acrylnitril-Copolymer und 65 Gew.-% Organosiloxan.

3. Erfindungsgemäßes Pfropfpolymerisat B (B.2 + B.1)

In einem Reaktor werden vorgelegt:
1540 Gew.-Teile Latex 2
1640 Gew.-Teile Wasser
Nach Initiierung mit einer Lösung von 7,5 Gew.-Teilen Kaliumperoxidisulfat in 195 Gew.-Teilen Wasser bei 65 ° C werden folgende Lösungen in den Reaktor innerhalb von 4 Stunden gleichmäßig eingespeist:

| | |
|---|---|
| Lösung 1: | 540 Gew.-Teile Styrol |
| | 210 Gew.-Teile Acrylnitril |
| Lösung 2: | 375 Gew.-Teile Wasser |
| | 15 Gew.-Teile Natriumsalz von $C_{14}$-$C_{18}$-Alkylsulfonsäuren. |

Anschließend wird innerhalb von 4 Stunden bei 65 ° C auspolymerisiert. Der Monomerumsatz beträgt mehr als 98 Gew.-%. Es resultiert ein Latex mit einem Feststoffgehalt von ca. 33 Gew.-%. Nach Koagulation mit einer wäßrigen Magnesiumsulfat-Lösung, Filtration und Trocknung im Vakuum wird das Pfropfpolymerisat in Form eines weißen Pulvers erhalten. Der Kautschukgehalt beträgt 32,5 Gew.-%.

4. Vergleichspfropfpolymerisat B*

Ein ASA-Pfropfpolymerisat aus 60 Gew.-% grobteiligem, hochvernetztem Acrylatkautschuk und 40 Gew.-% einer Styrol/Acrylnitril-Mischung im Gewichtsverhältnis 72:28 mit einer mittleren Teilchengröße ($d_{50}$) von ca. 400 nm. Das Produkt wurde durch Emulsionspolymerisation nach bekannten Verfahren hergestellt, wie z.B. in EP 34 748 (S. 8 ff.) beschrieben.

5. Herstellung der erfindungsgemäßen Formmassen

Die Komponenten A., B. und C. wurden in einem 3-l Innenkneter bei Temperaturen von 200-220 ° C compoundiert.

Dir Formkörper wurden auf einer Spritzgießmaschine bei 260 ° C hergestellt.

Die Kerbschlagzähigkeit wurde nach Methode Izod an Stäben der Abmessung 2,5 x 1/2 x 1/8" gemäß ASTM-D-256 gemessen.

Wie nachfolgende Tabelle zeigt, besitzen die erfindungsgemäßen Formmassen - trotz niedrigeren Gesamtkautschukgehalts - höheres Tieftemperatur-Zähigkeitsniveau als die des Vergleichsversuchs. Die Witterungsbeständigkeit beider Formmassen ist gut.

| Komponenten | | | | Kerbschlagzähigkeit (J/m) | | |
|---|---|---|---|---|---|---|
| A | B | B* | C | Raumtemperatur | -20° C | -50° C |
| (Gew.-%) | | | | | | |
| erfindungsgemäß | | | | | | |
| 60 | 24 | | 16 | 726 | 525 | 437 |
| Vergleich | | | | | | |
| 60 | | 20 | 20 | 620 | 287 | - |

Der Gesamtkautschukgehalt des erfindungsgemäßen Beispiels beträgt 7,8 Gew.-%, der des Vergleichsbeispiels 12 Gew.-%

**Patentansprüche**

1. Thermoplastische Polycarbonatformmassen enthaltend
   A. 52 bis 94 Gew.-% eines oder mehrerer aromatischer Polycarbonate und
   B. 6 bis 48 Gew.-% eines oder mehrerer teilchenförmiger Pfropfpolymerisate, dadurch gekennzeichnet, daß die Pfropfpolrnerisate herstellbar sind aus
      B.1 20 bis 90 Gew.-Teilen einer Polymerisat-Pfropfauflage aus wenigstens einem $\alpha,\beta$-ungesättigten, olefinischen Monomer auf
      B.2 80 bis 10 Gew.-Teile einer Pfropfgrundlage mit Kern/Mantel-Struktur, bestehend aus einem Kern
         a) aus organischem, harzartigem Polymerisat aus olefinisch ungesättigten Monomeren mit einer Glastemperatur (Tg) > 30 ° C und einem Hüllenpolymerisat (Mantel)
         b) aus vernetztem Silikonkautschuk, wobei das Gewichtsverhältnis des Kerns a) zur Hülle b) 0,1:99,9 bis 90:10 beträgt

   und wobei die Pfropfpolymerisate B) einen mittleren Teilchendurchmesser ($d_{50}$) von 0,05 bis 10 $\mu$m besitzen, und wobei die Summe der Gew.-Teile aus B.1 und B.2 stets 100 Gew.-Teile ergibt.

2. Thermoplastische aromatische Polycarbonatformassen gemäß Anspruch 1, dadurch gekennzeichnet, daß der Kern a) im Pfropfpolymerisat B) eine Glastemperatur von >60 ° C hat.

3. Formmassen gemäß Ansprüche 1 und 2, dadurch gekennzeichnet, daß maximal die Hälfte der Gewichtsprozente der Komponente A) durch andere Thermoplasten C) ersetzt ist, wobei die Summe der Gewichtsprozente aus den Komponenten A) + B) + C) jeweils 100 Gew.-% ist.

4. Formassen gemäß Anspruch 3, dadurch gekennzeichnet, daß C) ein thermoplastisches Copolymerisat ist aus
   C.1 50 bis 95 Gew.-Teilen Styrol, $\alpha$-Methyl-Styrol, kernsubstituiertem Styrol, Methylmethacrylat oder Mischungen daraus und
   C.2 50 bis 5 Gew.-Teilen (Meth)Acrylnitril, Methylmethacrylat, Maleinsäureanhydrid, N-substituiertem Maleinimid oder Mischungen daraus, wobei die Summe der Gew.-Teile aus C.1 und C.2 jeweils 100 beträgt.

5. Formmassen gemäß Anspruch 1, enthaltend
   A) in Mengen von 60 bis 86 Gew.-% und
   B) in Mengen von 14 bis 40 Gew.-%.

6. Formmassen gemäß Anspruch 1, dadurch gekennzeichnet, daß die Komponente B) aus 30 bis 80 Gew.-Teilen B.1 und 70 bis 20 Gew.-Teilen B.2 herstellbar ist.

7. Formmassen gemäß Anspruch 1, dadurch gekennzeichnet, daß im Pfropfpolymerisat B) das Gewichtsverhältnis des Kerns a) zur Hülle b) 10:90 bis 50:50 beträgt.

8. Formmassen gemäß Anspruch 1, dadurch gekennzeichnet, daß der mittlere Teilchendurchmesser ($d_{50}$) von 0,1 µm bis 2 µm ist.

9. Formmassen gemäß Anspruch 1, dadurch gekennzeichnet, daß sie zusätzlich Stabilisatoren, Pigmente, Entformungsmittel, Flammschutzmittel und/oder Antistatika enthalten.

10. Verfahren zur Herstellung der Formmassen der Ansprüche 1 bis 9, dadurch gekennzeichnet, daß man die Komponenten A), B) und gegebenenfalls C), Stabilisatoren, Pigmente, Entformungsmittel, Flammschutzmittel und/oder Antistatika vermischt und dann bei Temperaturen von 200 °C bis 330 °C in gebräuchlichen Vorrichtungen schmelzcompoundiert oder schmelzextrudiert.

## Claims

1. Thermoplastic polycarbonate moulding compositions containing
   A) 52 to 94% by weight of one or more aromatic polycarbonates and
   B) 6 to 48% by weight of one or more particulate graft polymers,
   characterized in that the graft polymers can be prepared from
   B.1 20 to 90 parts by weight a polymer graft shell of at least one α,β-unsaturated, olefinic monomer on
   B.2 80 to 10 parts by weight a graft base having a core/shell structure, consisting of a core
   a) of organic, resin-like polymer of olefinically unsaturated monomers having a glass temperature (Tg) above 30 °C
   and a shell polymer (shell)
   b) of crosslinked silicone rubber,
   the ratio by weight of the core a) to the shell b) being from 0.1:99.9 to 90:10, the graft polymers B) having an average particle diameter ($d_{50}$) of 0.05 µm to 10 µm, and the sum of the parts by weight of B.1 and B.2 always being 100 parts by weight.

2. Thermoplastic aromatic polycarbonate moulding compositions as claimed in claim 1, characterized in that the core a) in the graft polymer B) has a glass temperature of > 60 °C.

3. Thermoplastic polycarbonate moulding compositions as claimed in claim 1, characterized in that at most half the percentages by weight of component A) is replaced by other thermoplastics C), the sum of the percentages by weight of components A + B) + C) always being 100% by weight.

4. Moulding compositions as claimed in claim 3, characterized in that C) is a thermoplastic copolymer of
   C.1 50 to 95 parts by weight of styrene, α-methyl styrene, nucleus-substituted styrene, methyl methacrylate or mixtures thereof and
   C.2 50 to 5 parts by weight (meth)acrylonitrile, methyl methacrylate, maleic anhydride, N-substituted maleic imide or mixtures thereof, the sum of the parts by weight of C.1 and C.2 always being 100.

5. Moulding compositions as claimed in claim 1, containing
   A) in quantities of 60 to 80% by weight and
   B) in quantities of 14 to 40% by weight.

6. Moulding compositions as claimed in claim 1, characterized in that component B) may be prepared from 30 to 80 parts by weight B.1 and 70 to 20 parts by weight B.2.

7. Moulding compositions as claimed in claim 1, characterized in that the ratio by weight of the core a) to the shell b) in the graft polymer B) is from 10:90 to 50:50.

8. Moulding compositions as claimed in claim 1, characterized in that the average particle diameter ($d_{50}$) is 0.1 µm to 2 µm.

**9.** Moulding compositions as claimed in claim 1, characterized in that they additionally contain stabilizers, pigments, mould release agents, flameproofing agents and/or antistatic agents.

**10.** A process for the production of the moulding compositions claimed in claims 1 to 9, characterized in that components A), B) and, optionally, C), stabilizers, pigments, mould release agents, flameproofing agents and/or antistatic agents are mixed and the resulting mixtures are melt-compounded or melt-extruded in standard machines at temperatures of 200 ° C to 330 ° C.

**Revendications**

**1.** Matières à mouler thermoplastiques à base de polycarbonates contenant :

A. 52 à 94 % en poids d'un ou plusieurs polycarbonates aromatiques, et

B. 6 à 48 % en poids d'un ou plusieurs polymères greffés à l'état de particules, caractérisée en ce que les polymères greffés sont préparés à partir de :

B.1 20 à 90 parties en poids de monomères à greffer sur le polymère de support, consistant en au moins un monomère à insaturation $\alpha,\beta$-oléflnique, greffés sur

B.2 8 à 10 parties en poids d'un support de greffage à structure en enveloppe/noyau consistant en un noyau

a) d'un polymère organique résineux de monomères à insaturation oléfinique ayant une température de transition du second ordre Tg supérieure à 30 ° C, et un polymère d'enveloppe

b) d'un caoutchouc de silicone réticulé, les proportions relatives en poids entre le noyau a) et l'enveloppe b) allant de 0,1:99,9 à 90:10,

et les polymères greffés B) ayant un diamètre de particule moyen $d_{50}$ de 0,05 à 10 $\mu$m, et la somme des parties en poids de B.1 et B.2 étant toujours de 100 parties en poids.

**2.** Matières à mouler thermoplastiques à base de polycarbonates aromatiques selon revendication 1, caractérisées en ce que le noyau a) du polymère greffé B) a une température de transition du second ordre supérieure à 60 ° C.

**3.** Matières à mouler thermoplastiques selon revendications 1 et 2, caractérisées en ce que la moitié au maximum des pourcentages en poids du composant A) sont remplacés par d'autres matières thermoplastiques C), la somme des pourcentages en poids des composants A) + B) + C) étant toujours de 100 % en poids.

**4.** Matières à mouler selon revendication 3, caractérisées en ce que C) est un copolymère thermoplastique de :

C.1 50 à 95 parties en poids de styrène, d'$\alpha$-méthylstyrène, d'un styrène substitué dans le noyau, de méthacrylate de méthyle ou leurs mélanges, et

C.2 50 à 5 parties en poids de (méth)acrylonitrile, de méthacrylate de méthyle, d'anhydride maléique, d'un maléimide substitué à l'azote ou leurs mélanges, la somme des parties en poids de C.1 et C.2 étant toujours de 100.

**5.** Matières à mouler selon revendication 1, contenant :

A) en quantités de 60 à 86 % en poids, et

B) en quantités de 14 à 40 % en poids.

**6.** Matières à mouler selon revendication 1, caractérisées en ce que le composant B) a été préparé à partir de 30 à 80 parties en poids de B.1 et de 70 à 20 parties en poids de B.2.

**7.** Matières à mouler selon revendication 1, caractérisées en ce que, dans le polymère greffé B) des proportions relatives en poids entre le noyau a) et l'enveloppe b) vont de 10:90 à 50:50.

**8.** Matières à mouler selon revendication 1, caractérisées en ce que le diamètre de particule moyen $d_{50}$ va de 0,1 $\mu$m à 2 $\mu$m.

**9.** Matières à mouler selon revendication 1, caractérisées en ce qu'elles contiennent en outre des stabilisants, des pigments, des agents de démoulage, des agents ignifugeants et/ou des agents antistatiques.

**10.** Procédé de préparation des matières à mouler des revendications 1 à 9, caractérisé en ce que l'on mélange les composants A), B) et éventuellement C), des stabilisants, des pigments, des agents de démoulage, des agents ignifugeants et/ ou des agents antistatiques et on fait suivre d'un mélange à l'état fondu ou d'une extrusion à l'état fondu à des températures de 200 à 330 °C dans des appareillages usuels.